# EUROPÄISCHE PATENTANMELDUNG

(11) **EP 4 170 874 A1**
(43) Veröffentlichungstag der Anmeldung: **26.04.2023**
(21) Anmeldenummer: 21203610.7
(22) Anmeldetag: 20.10.2021
(51) Int. Cl.: H02K 15/00, H02K 15/06

(54) **POSITIONIERVORRICHTUNG ZUM POSITIONIEREN VON LEITERENDEN UND VERFAHREN ZUR HERSTELLUNG EINER ELEKTRISCHEN WICKLUNG**

(71) Anmelder: Miba Automation Systems Ges.m.b.H., 4663 Laakirchen (AT)
(72) Erfinder: EDER, Jakob, 4810 Gmunden (AT)
(74) Vertreter: Burger, Hannes

(57) **Zusammenfassung**

Die Erfindung betrifft eine Positioniervorrichtung sowie ein Verfahren zum Positionieren von Leiterenden (2) im Zuge der Herstellung einer elektrischen Wicklung für eine elektrische Maschine. Dabei sind entlang einer Kreisumfangsrichtung (20) einer Tragebene (14) abwechselnd eine Mehrzahl von ersten und zweiten Positionierelementen (16, 18) angeordnet, wobei Paare aus ersten und zweiten Positioniervorsprüngen (17, 19) an den ersten und zweiten Positionierelementen (16, 18) größenveränderbare Positionierfenster ausbilden, welche jeweils zur Hindurchführung von Leiterenden (2) vorgesehen sind. Die ersten Positionierelemente (16) weisen an ihren beiden in Richtung zur Zentralachse (12) verlaufenden Längsseiten jeweils mehrere der ersten Positioniervorsprünge (17) auf. Die zweiten Positionierelemente (18) weisen an ihren beiden in Richtung zur Zentralachse (12) verlaufenden Längsseiten jeweils mehrere der zweiten Positioniervorsprünge (19) auf. Jeweils nur ein erstes Positionierelement (16) oder nur ein zweites Positionierelement (18) ist zur Positionierung zwischen zwei in Kreisumfangsrichtung (20) unmittelbar benachbarten, radial verlaufenden Sektionen von Leiterenden (2) vorgesehen. Dadurch können Leiterenden (2) einer herzustellenden Formstab-Wicklung exakt und störungssicher positioniert werden.

## Beschreibung

Die Erfindung betrifft eine Positioniervorrichtung zum Positionieren von Leiterenden im Zuge der Herstellung einer elektrischen Wicklung für eine elektrische Maschine, sowie ein Verfahren zum Herstellen einer elektrischen Wicklung einer elektrischen Maschine, wie dies in den Ansprüchen angegeben ist.

Die DE102019135802A1 beschreibt eine Spannvorrichtung und ein Spannverfahren zum Spannen von Drahtenden, welche Drahtenden örtlich verteilte Teilabschnitte einer herzustellenden elektrischen Wicklung sind. Diese Spannvorrichtung umfasst eine Anordnung erster Spannelemente, die jeweils eine erste und eine zweite Spannfläche aufweisen, und eine Anordnung zweiter Spannelemente, die jeweils eine dritte und eine vierte Spannfläche aufweisen, wobei jeweils ein erstes und ein zweites Spannelement paarweise derart angeordnet sind, dass sich jeweils eine erste und eine dritte Spannfläche und jeweils eine zweite und eine vierte Spannfläche zum Einspannen eines Drahtendes oder einer Gruppe von Drahtenden zwischen diesen Spannflächen gegenüberliegen. Es ist eine erste Bewegungseinrichtung ausgebildet, welche zum relativ Bewegen der ersten Spannelemente relativ zu den zweiten Spannelementen in einer ersten Bewegungsrichtung, die mit wenigstens einer Bewegungsrichtungskomponente senkrecht zu der ersten und dritten Spannfläche gerichtet ist, vorgesehen. Eine zweite Bewegungseinrichtung ist ausgebildet zum relativ Bewegen der ersten Spannelemente relativ zu den zweiten Spannelementen in einer zweiten Bewegungsrichtung, die mit wenigstens einer Bewegungsrichtungskomponente senkrecht zu der zweiten und vierten Spannfläche gerichtet ist. Dadurch sollen die Drahtenden mit geringem apparativen Aufbau leichter und exakter positioniert und gespannt werden können. Der entsprechende Aufbau ist jedoch nur bedingt zufriedenstellend.

Auch die JP6489368B2 beschreibt eine Vorrichtung zum Positionieren von Leiterenden einer elektrischen Wicklung, welche Leiterenden in Axialrichtung aus einem Statorkern hervorstehen. Dabei werden Paare oder Gruppen von zueinander nächstliegenden Leiterenden aneinandergedrückt, um einen Verbindungs- bzw. Schweißprozess zuverlässig ausführen zu können. Zum paar- oder gruppenweisen Andrücken der Leiterenden sind ein erster und ein zweiter Andrückfinger vorgesehen, welche jeweils in radial verlaufende Zwischenräume zwischen radial sich erstreckenden Gruppen von Leiterenden derart eingeführt werden, dass dazwischen eine radial sich erstreckende Gruppe von Leiterenden angeordnet ist. Der erste und der zweite Andrückfinger weisen an ihren einander zugewandten Längsseiten jeweils mehre Vorsprünge auf, welche in Bezug auf die Kreisumfangsrichtung des Stators zwischen Paaren oder Gruppen von Leiterenden eingreifen können. Dementsprechend weisen der erste und der zweite Andrückfinger jeweils eine kammartige Form auf. Durch in Bezug auf die Radialrichtung des Stators gegenläufige Verstellbewegungen des ersten und des zweiten Andrückfingers werden die Leiterenden innerhalb der jeweiligen Paare oder Gruppen von Leiterenden in Bezug auf die Radialrichtung des Stators aneinandergedrückt. Entsprechend einer weiteren Ausführungsform können ein dritter und ein vierter Andrückfinger vorgesehen sein, mit welchen die radial innersten Leiterenden in Radialrichtung nach außen und die radial äußersten Leiterenden in Radialrichtung nach innen gedrückt werden können. Nachteilig ist dabei, dass zwei in Kreisumfangsrichtung des Stators unmittelbar benachbarte, radiale Gruppen von Leiterenden nicht gleichzeitig bearbeitet werden können, sondern zeitversetzt zu bearbeiten sind und dadurch unbefriedigend lange Taktzeiten entstehen.

Der vorliegenden Erfindung lag die Aufgabe zugrunde, eine verbesserte Positioniervorrichtung für die Leiterabschnitte in einem Halbfabrikat einer elektrischen Wicklung anzugeben. Insbesondere soll der Aufbau der Positioniervorrichtung möglichst robust sein und soll zudem eine hohe Positioniergenauigkeit erzielbar sein. Weiters soll ein verbessertes Verfahren zur Herstellung einer elektrischen Wicklung geschaffen werden, welches eine rationelle und prozessstabile Herstellung von elektrischen Wicklungen aus Formstab-Leiterabschnitten unterstützt.

Die erstgenannte Aufgabe wird durch eine Positioniervorrichtung gemäß den Ansprüchen gelöst.

Die erfindungsgemäße Positioniervorrichtung dient zum Positionieren von Leiterenden im Zuge der Herstellung einer elektrischen Wicklung für eine elektrische Maschine, welche Leiterenden bzw. Gruppen von Leiterenden, insbesondere Paare von Leiterenden, entlang von mehreren Kreisbahnen mit einem gemeinsamen Zentrumspunkt angeordnet sind, insbesondere entlang von konzentrischen Kreisbahnen angeordnet sind. Die Leiterenden oder Gruppen bzw. Paare von Leiterenden sind zudem in Kreisumfangsrichtung der Kreisbahnen voneinander beabstandet, sodass in Radialrichtung zu den Kreisbahnen verlaufende Gruppen bzw. Sektionen von Leiterenden gebildet sind, welche radial verlaufenden Sektionen entlang der Kreisumfangsrichtung der Kreisbahnen verteilt angeordnet sind. Die für eine solche matrixartige Anordnung von Leiterenden vorgesehene Positioniervorrichtung für die Leiterenden umfasst einen mechanischen Tragkörper, welcher eine gedachte Platten- bzw. Tragebene und eine senkrecht zu der Platten- bzw. Tragebene verlaufende Zentralachse definiert. Mehrere erste Positionierelemente die jeweils mehrere erste Positioniervorsprünge aufweisen, erstrecken sich radial zu der Zentralachse des Tragkörpers. Zudem erstrecken sich mehrere zweite Positionierelemente, die jeweils mehrere zweite Positioniervorsprünge aufweisen, radial zu der Zentralachse des Tragkörpers. Entlang einer Kreisumfangsrichtung der Tragebene sind abwechselnd eine Mehrzahl von ersten und zweiten Positionierelementen angeordnet, wobei Paare aus ersten und zweiten Positioniervorsprüngen größenveränderbare Positionierfenster ausbilden, welche jeweils zur Hindurchführung von wenigstens einem Leiterende, vorzugsweise von zwei oder mehr Leiterenden, vorgesehen sind. Die ersten Positionierelemente weisen an ihren beiden in Richtung zur Zentralachse verlaufenden Längsseiten, also an den beiden radial orientierten Längsseiten bzw. Seitenrändern, jeweils mehrere der ersten Positioniervorsprünge auf. Die zweiten Positionierelemente weisen an ihren beiden in Richtung zur Zentralachse verlaufenden Längsseiten, also an den beiden radial orientierten Längsseiten bzw. Seitenrändern, jeweils mehrere der zweiten Positioniervorsprünge auf. Dabei ist jeweils nur ein einziges erstes oder zweites Positionierelement zur Positionierung bzw. Einführung zwischen zwei in Kreisumfangsrichtung unmittelbar benachbarten, radial verlaufenden Sektionen von Leiterenden vorgesehen.

Dementsprechend weisen die ersten und die zweiten Positionierelemente, welche auch als Positionierfinger bezeichnet werden können, jeweils eine Doppelkamm-Geometrie bzw. eine Fischgrätenstruktur auf, wobei lediglich ein einziger erster Positionierfinger oder lediglich ein einziger zweiter Positionierfinger zum Einführen in den freien Zwischenraum zwischen zwei in Kreisumfangsrichtung eines Stators bzw. der Tragebene unmittelbar benachbarten Sektionen bzw. Radialgruppen von Leiterenden vorgesehen ist. Die ersten und zweiten Positioniervorsprünge weisen unterschiedliche Formen auf bzw. sind sie unterschiedlich orientiert.

Demzufolge werden zwei in Kreisumfangsrichtung unmittelbar benachbarte erste und zweite radiale Sektionen von Leiterenden, also eine erste und zweite Radialgruppe von Leiterenden, von lediglich einem einzigen Positionierelement mit einer Positionier- bzw. Andrückkraft in Radialrichtung beaufschlagt. In Ansicht auf die Tragebene des Stators bzw. in Blickrichtung parallel zur Zentralachse spannt bzw. beaufschlagt also ein einziges Positionierelement gleichzeitig eine linke und eine rechte Radialgruppe bzw. einen linken und rechten Sektor von Leiterenden. Diese Spann- bzw. Beaufschlagungsrichtung ist dabei entweder in Radialrichtung nach außen oder in Radialrichtung nach innen.

Insbesondere ist jeweils nur ein einziger, beidseitig konturierter bzw. gezackter Positionierfinger zum Einführen bzw. Einfädeln zwischen zwei in Kreisumfangsrichtung unmittelbar benachbarten Sektionen bzw. Radialgruppen von Leiterenden vorgesehen. Dadurch kann ein relativ stabiler bzw. robuster Aufbau erzielt werden. Insbesondere sind die einzelnen, finger- bzw. zungenartigen Positionierelemente weniger filigran, weil in Bezug auf die Kreisumfangsrichtung vergleichsweise breiter ausführbare erste und zweite Positionierelemente ermöglicht sind. Im Vergleich zu einer Zweifach-Anordnung von Positionierelementen pro radialem Zwischenraum können durch die anspruchsgemäße Ausgestaltung die ersten und zweite Positionierelemente derart ausgeführt werden, dass deren Breite etwa bis zum Doppelten im Vergleich zu einer Zweifach-Anordnung von Positionierelementen betragen kann. Darüber hinaus können mit der angegebenen Positioniervorrichtung möglichst kurze Taktzeiten in Zusammenhang mit der Positionierung zahlreicher Leiterenden an den jeweiligen Soll-Positionen erzielt werden.

Des Weiteren kann es zweckmäßig sein, wenn die ersten und/oder die zweiten Positionierelemente in Bezug auf ihre Längsmittelachsen symmetrisch positionierte und symmetrisch geformte erste Positioniervorsprünge respektive zweite Positioniervorsprünge aufweisen. Dadurch können unerwünschte Querkräfte in Bezug auf die Längsmittelachse des ersten bzw. zweiten Positionierelementes hintan gehalten werden, wenn die ersten bzw. zweiten Positionierelemente radiale Verstellbewegungen ausführen. Die Positionierelemente können dadurch in Höhenrichtung relativ schlank ausgeführt werden bzw. können hohe Stellgeschwindigkeiten vorgesehen werden, wobei trotzdem eine hohe Positioniergenauigkeit der Leiterenden gewährleistet werden kann.

Ferner kann vorgesehen sein, dass eine parallel zur Tragebene gemessene Mindestbreite eines zentralen Tragabschnittes des ersten und/oder zweiten Positionierelementes mehr als 60%, insbesondere zwischen 70% bis 99%, einer lichten Weite zwischen zwei in Kreisumfangsrichtung unmittelbar benachbarten, auf einer gemeinsamen Kreisbahn liegenden Leiterenden beträgt, wobei die Mindestbreite des zentralen Tragabschnittes auf die besagte, gemeinsame Kreisbahn bezogen ist. Der Zentralabschnitt der Positionierelemente ist dabei exklusive der seitlich jeweils abstehenden Positioniervorsprünge zu verstehen. Dadurch sind relativ breite und stabile Positionierelemente ermöglicht und ist somit eine hohe Positioniergenauigkeit bzw. eine hohe Positionierrobustheit auch bei hohen Positioniergeschwindigkeiten bzw. -beschleunigungen erzielbar. Das Risiko einer dauerhaften Deformierung von einem der Positionierelemente oder von mehreren der Positionierelemente im Falle einer Kollision mit Leiterenden im Zuge der Einfädelung der Leiterenden in die Positionierfenster kann dadurch verringert werden.

Darüber hinaus kann vorgesehen sein, dass jedem der ersten Positionierelemente und jedem der zweiten Positionierelemente jeweils ein Linear-Verstellantrieb, insbesondere ein Pneumatikzylinder, zugeordnet ist. Insbesondere kann jedem der Positionierelemente in deren radialer Verlängerung jeweils ein Linear-Verstellantrieb zugewiesen sein. Die Linear-Verstellantriebe sind derart eingerichtet, dass jedes der ersten und zweiten Positionierelemente radial zur Zentralachse verstellbar ist. Dadurch ist eine automatisiert ausführbare Positionierung der Leiterelemente bzw. deren Leiterenden an deren Plan- bzw. Sollposition ermöglicht. Zudem kann so eine Einzelansteuerung der Positionierelemente erzielt werden, sodass eine zeitlich und/oder örtlich individuelle Ansteuerung bzw. Verstellung der einzelnen Positionierelemente ermöglicht ist.

Entsprechend einer zweckmäßigen Ausführungsform ist jedes der Positionierelemente mit zwei Linear-Verstellantrieben bewegungsgekoppelt, insbesondere mit zwei in Kreisumfangsrichtung unmittelbar benachbarten Linear-Verstellantrieben in Antriebsverbindung stehend. Die Linear-Verstellantriebe können dadurch einfachwirkend ausgeführt sein, insbesondere als einfachwirkende Zylinder ausgeführt sein. Dadurch kann der mechanische und steuerungstechnische Aufbau der Positioniervorrichtung möglichst einfach gehalten werden.

Vorteilhaft ist auch eine Ausprägung, gemäß welcher vorgesehen sein kann, dass jedes der ersten und zweiten Positionierelemente unter Zwischenschaltung von jeweils einem Schwenkhebel, welche Schwenkhebel jeweils eine parallel zur Tragebene verlaufende Schwenkachse aufweisen, mit einem der genannten Linear-Verstellantriebe bewegungsgekoppelt ist. Dadurch können die Positionierelemente und die Linear-Verstellantriebe in unterschiedlichen Ebenen angeordnet werden, insbesondere zueinander höhenversetzt positioniert werden, was einen kompakten und robusten Aufbau der Positioniervorrichtung ermöglicht. Zudem ist dadurch eine einfache Umkehr der radialen Bewegungsrichtungen zwischen einem Linear-Verstellantrieb und einem in dessen radialer Verlängerung zugeordneten Positionierelement erzielbar.

Entsprechend einer vorteilhaften Verstellmechanik können die Schwenkhebel derart ausgeführt sein, dass sie im Zuge einer Verschwenkung nur Schiebe- bzw. Druckkräfte auf die ersten und zweiten Positionierelemente ausüben können. Insbesondere sind die Positionierelemente von aktivierten, d.h. mit Antriebsenergie beaufschlagten Linear-Verstellantrieben in Richtung zur Zentralachse bewegbar. Ein Formschluss bzw. eine bidirektionale Bewegungskopplung zwischen den Schwenkhebeln und den Positionierelementen zum Aufbringen einer radial nach außen wirkenden Zugkraft auf die Positionierelemente ist dementsprechend nicht gegeben.

Gemäß einer vorteilhaften Weiterbildung ist vorgesehen, dass eine zentrale Steuervorrichtung ausgebildet ist, welche dazu eingerichtet ist, jeden der Linear-Verstellantriebe unabhängig voneinander zu aktivieren und abzuschalten. Dadurch ist ein quasi individueller Ausgleich von Toleranzen und Ungenauigkeiten in der Anordnung der Leiterelemente bzw. Leiterenden ermöglicht. Dies ist für Verbindungsprozesse, insbesondere für Laser-Schweißprozesse, zwischen aneinander anliegenden Paaren von Leiterenden wichtig, nachdem ein solcher Verbindungsprozess sehr qualitätssensibel ist.

Ferner kann es zweckmäßig sein, wenn eine Vorpositionierungs-Vorrichtung ausgebildet ist, welche in Bezug auf eine Einführrichtung von Leiterenden in die Positionierfenster vorzugsweise unmittelbar vor den Positionierfenstern angeordnet ist. Dadurch ist eine zuverlässige bzw. funktionsstabile Vorpositionierung der Leiterenden bzw. der sektoralen Gruppen von Leiterenden in Bezug auf die Kreisumfangsrichtung der jeweilige Kreisbahnen erzielbar. Insbesondere können so unerwünschte Kollisionen zwischen den Positionierelementen und den Leiterenden im Zuge des Einführens der Leiterenden in die Positionierfenster hintan gehalten werden.

Insbesondere kann vorgesehen sein, dass die Vorpositionierungs-Vorrichtung mehrere radial zur Zentralachse verlaufende Positionierschlitze aufweist, welche Positionierschlitze jeweils zum Einführen von gesamten "sektoralen" Gruppen von Leiterenden vorgesehen sind. Insbesondere sind diese Positionierschlitze zum Einführen und zum damit einhergehenden Vorpositionieren von radialen Sektionen von Leiterenden ausgebildet. Die Positionierschlitze sind derart dimensioniert bzw. angeordnet, dass eine Vorpositionierung, also eine Grobausrichtung der Leiterenden in Bezug auf die Kreisumfangsrichtung erfolgt.

Des Weiteren kann es zweckmäßig sein, wenn die Positionierschlitze wenigstens an einzelnen ihrer Begrenzungswände Einführfasen für Leiterenden aufweisen, welche Einführfasen in Einführrichtung der Leiterenden sich verjüngende Positionierschlitze ausbilden. Diese Einführfasen bzw. Abschrägungen der Begrenzungswände definieren sogenannte Einführtrichter für die zu einer sektoralen Gruppe zählenden Leiterenden. Kollisionen bzw. Verhakungen zwischen den Leiterenden und den Begrenzungsabschnitten der Positionierschlitze können so hintan gehalten werden. Die Gefahr von starken, unerwünschten Deformierungen der Leiterenden kann dadurch reduziert werden. Der Positionierprozess und auch nachfolgende Bearbeitungsprozesse können dadurch rasch und störungsfrei ausgeführt werden.

Entsprechend einer vorteilhaften Ausgestaltung kann vorgesehen sein, dass die Positionierschlitze in mehreren, zusammengefügten Teilplatten ausgebildet sind, oder dass alle Positionierschlitze in einer einzigen Positionierplatte ausgebildet sind. Im Vergleich zu einer Anbringung von Abschrägungen bzw. spitz zulaufenden Führungsflächen an den verstellbar gelagerten Positionierelementen selbst, kann so eine relativ robuste Ausführung geschaffen werden, welche auch relativ einfach an sich verändernde Anforderungen bzw. Geometrien angepasst werden kann.

Gemäß einer besonderen Ausprägung ist es möglich, dass mehrere Radial-Vorpositionierungselemente ausgebildet sind, welche Radial-Vorpositionierungselemente entlang der Kreisumfangsrichtung orientierte Positionierstege aufweisen, wobei zwischen zwei in Radialrichtung unmittelbar benachbarten Positionierstegen ein Einführbereich für ein Paar aus zwei in Radialrichtung unmittelbar benachbarte Leiterenden ausgebildet ist. Diese Radial-Vorpositionierungselemente sind baulich eigenständig, also separat zu den ersten und zweiten Positionierelementen ausgebildet. Damit wird eine zuverlässige Vor- bzw. Grobpositionierung von zusammengehörigen Paaren von Leiterenden in Bezug auf die Radialrichtung der jeweiligen Kreisbahnen geschaffen.

Entsprechend einer Weiterbildung kann es vorteilhaft sein, wenn die Positionierstege jeweils wenigstens eine Einführfase aufweisen, sodass die Einführbereiche für Paare von Leiterenden entlang der Einführrichtung verjüngend ausgebildet sind. Damit wird ein rasches und möglichst prozessstabiles Einfädeln sowie Vor- bzw. Grobpositionieren der zusammengehörigen bzw. miteinander zu verschweißenden Paare von Leiterenden erzielt.

Gemäß einer vorteilhaften Ausprägung kann vorgesehen sein, dass die Radial-Vorpositionierungselemente gegenüber den ersten und zweiten Positionierelementen baulich eigenständig ausgeführt sind. Dadurch ist ein stabiler bzw. robuster Aufbau erzielbar. Die Herstellungskosten können aufgrund geringer Form- bzw. Bauteilkomplexität möglichst niedrig gehalten werden. Eine Anpassung an sich ändernde Geometrien bzw. Anordnungen von Leiterenden ist möglich, ohne die gesamte Positioniervorrichtung ersetzen zu müssen. Insbesondere kann mit einem Austausch bzw. einer Anpassung von Einzelkomponenten eine relativ einfache und kostengünstige Adaptierung der Positioniervorrichtung erreicht werden.

Darüber hinaus kann vorgesehen sein, dass die Radial-Vorpositionierungselemente innerhalb einer zentralen Bauteilebene angeordnet sind, welche zentrale Bauteilebene zwischen der Tragebene mit den ersten und zweiten Positionierelementen und einer unteren Bauteilebene mit den Positionierschlitzen angeordnet ist. Die Radial-Vorpositionierungselemente können somit aus einer Mehrzahl von einzelnen Plattenteilen gebildet sein, welche Plattenteile in Art von Doppelkämmen ausgeführt sind. Die einzelnen Radial-Vorpositionierungselemente sind zwischen der Ebene mit den ersten und zweiten Positionierelementen und der Ebene mit den Positionierschlitzen aufgenommen und dadurch zuverlässig gehalten.

Vorteilhaft ist auch eine Ausprägung, gemäß welcher vorgesehen sein kann, dass die Radial-Vorpositionierungselemente jeweils einen radial zur Zentralachse verlaufenden Tragabschnitt aufweisen, und dass an beiden radialen Längsrändern eines Tragabschnittes jeweils eine Mehrzahl von Positionierstegen ausgebildet ist. Dadurch ist eine Doppelkamm- bzw. Fischgrät-Struktur an den Radial-Vorpositionierungselementen geschaffen. Dies ermöglicht einen robusten und funktionszuverlässigen Aufbau der Positioniervorrichtung.

Gemäß einer Weiterbildung kann vorgesehen sein, dass die Radial-Vorpositionierungselemente und/oder die Vorpositionierungs-Vorrichtung in Bezug auf die Zentralachse unbeweglich sind, insbesondere starr befestigt sind. Dementsprechend ist keine Relativverstellbarkeit der genannten Vor- bzw. Grobpositionierungselemente gegenüber dem Tragkörper der Positioniervorrichtung vorgesehen. Dies begünstigt eine geringe Komplexität und möglichst niedrige Herstellungskosten der Positioniervorrichtung.

Ferner kann es zweckmäßig sein, wenn zwischen Paaren von in Kreisumfangsrichtung unmittelbar benachbarten ersten und zweiten Positionierelementen jeweils eine Kopplungswippe ausgebildet ist, welche zur Erzwingung von gegenläufigen radialen Bewegungen des ersten und zweiten Positionierelementes innerhalb eines Paares aus ersten und zweiten Positionierelementen vorgesehen ist. Dadurch ist es möglich, dass mit zwei einfach wirkenden Linear-Verstellantrieben, insbesondere einfachwirkenden Pneumatik-Zylindern, eine bidirektionale radiale Verstellbewegung für das erste und auch für das zweite Positionierelement innerhalb eines solchen Positionierelemente-Paares bereitgestellt wird. Zudem ist so sichergestellt, dass die mit einer Kopplungswippe gepaarten bzw. gekoppelten ersten und zweiten Positionierelemente mit deren einander zugewandten ersten und zweiten Positioniervorsprüngen einzelne Positionierfenster definieren, deren radiale Fensterhöhe sich synchron verkleinert oder synchron vergrößert, wenn die Kopplungswippe um deren Wippachse verschwenkt wird.

Insbesondere kann vorgesehen sein, dass die Kopplungswippen jeweils eine parallel zur Zentralachse verlaufende Wippachse aufweisen, und dass ein erster Endabschnitt der Kopplungswippen mit dem ersten Positionierelement gelenkig verbunden ist und ein zweiter Endabschnitt der Kopplungswippen mit dem zweiten Positionierelement gelenkig verbunden ist. Dadurch ist sichergestellt, dass die ersten und zweiten Positionierelemente innerhalb eines gekoppelten Paares aus ersten und zweiten Positionierelementen zwangsweise in entgegengesetzte radiale Richtungen bewegt werden. Dadurch wird die radiale Größenveränderbarkeit der Positionierfenster für die jeweiligen Paare von Leiterenden sichergestellt.

Die Aufgabe der Erfindung wird auch durch ein Verfahren gemäß den Ansprüchen gelöst.

Das erfindungsgemäße Verfahren zum Herstellen einer elektrischen Wicklung einer elektrischen Maschine umfasst folgende Verfahrensschritte:
- Bereitstellen von elektrischen Leiterelementen, deren Leiterenden oder Gruppen von Leiterenden, insbesondere Paare von Leiterenden, entlang von mehreren Kreisbahnen mit einem gemeinsamen Zentrumspunkt angeordnet und dabei in Kreisumfangsrichtung der Kreisbahnen voneinander beabstandet sind, sodass in Radialrichtung zu den Kreisbahnen verlaufende Sektionen von Leiterenden gebildet sind, welche radial verlaufenden Sektionen entlang der Kreisumfangsrichtung der Kreisbahnen verteilt angeordnet sind,
- Bereitstellen einer Positioniervorrichtung, welche insbesondere gemäß den Ansprüchen ausgebildet ist, und zumindest folgende Merkmale umfasst:
- einen Tragkörper, welcher eine grundsätzlich gedachte bzw. virtuelle Tragebene und eine senkrecht zu der Tragebene verlaufende Zentralachse definiert,
- mehrere erste Positionierelemente die jeweils mehrere erste Positioniervorsprünge aufweisen, welche ersten Positionierelemente radial zu der Zentralachse des Tragkörpers verlaufen,
- mehrere zweite Positionierelemente die jeweils mehrere zweite Positioniervorsprünge aufweisen, welche zweiten Positionierelemente radial zu der Zentralachse des Tragkörpers verlaufen,
- wobei entlang der Kreisumfangsrichtung der Tragebene abwechselnd eine Mehrzahl von ersten und zweiten Positionierelementen angeordnet ist, und
- wobei Paare aus ersten und zweiten Positioniervorsprüngen größenveränderbare Positionierfenster ausbilden, welche jeweils zur Hindurchführung von wenigstens einem Leiterende, vorzugsweise von zwei Leiterenden, vorgesehen sind, wobei
- die ersten Positionierelemente an ihren beiden in Richtung zur Zentralachse verlaufenden Längsseiten, also an den im Wesentlichen radial zur Zentralachse verlaufenden Seitenrändern bzw. Längsseiten, jeweils mehrere der ersten Positioniervorsprünge aufweisen, wobei
- die zweiten Positionierelemente an ihren beiden in Richtung zur Zentralachse verlaufenden Längsseiten, also an den im Wesentlichen radial zur Zentralachse verlaufenden Seitenrändern bzw. im Wesentlichen radial zur Zentralachse verlaufenden Längsseiten, jeweils mehrere der zweiten Positioniervorsprünge aufweisen, wobei
- jeweils nur ein einziges erstes Positionierelement oder nur ein einziges zweites Positionierelement zwischen zwei in Kreisumfangsrichtung unmittelbar benachbarten, radial verlaufenden Gruppen bzw. Sektionen von Leiterenden eingeführt und positioniert wird, und wobei
- durch radiales Verschieben und gesteuertes Positionieren der ersten und zweiten Positionierelemente die zwischen den ersten und zweiten Positioniervorsprüngen angeordneten Leiterenden, d.h. die in den jeweiligen Positionierfenstern angeordneten Leiterenden, in deren Sollpositionen in Bezug auf die Radialrichtung der jeweiligen Kreisbahnen verbracht werden.

Ein solches Herstellungsverfahren kann prozesssicher und trotzdem mit möglichst kurzen Taktzeiten ausgeführt werden. Weitere mit diesem Herstellungsverfahren erzielbare Vorteile und technischen Wirkungen sind den vorhergehenden und den nachstehenden Beschreibungsteilen zu entnehmen. Die Anwendung des angegebenen Verfahrens eignet sich besonders im Zuge der Herstellung von Statorwicklungen in Formstab-Ausführung.

Insbesondere kann vorgesehen sein, dass die jeweils links und rechts zu der Längsmittelachse der ersten Positionierelemente angeordneten Leiterenden mittels den ersten Positioniervorsprüngen in Radialrichtung zur Zentralachse nach innen respektive nach außen positioniert werden, und dass die jeweils links und rechts zu der Längsmittelachse der zweiten Positionierelemente angeordneten Leiterenden mittels den zweiten Positioniervorsprüngen in Radialrichtung zur Zentralachse nach außen respektive nach innen positioniert werden. Dies ermöglicht einen kollisionsfreien und prozessstabilen Positioniervorgang für die Leiterenden.

Entsprechend einer praktikablen Maßnahme kann vorgesehen sein, dass die elektrischen Leiterelemente in Aufnahmenuten eines hohlzylindrischen Statorkerns aufgenommen sind und die Leiterenden der elektrischen Leiter mittels den Aufnahmenuten in radialer Richtung und in Kreisumfangsrichtung vorpositioniert werden. Dementsprechend sind die elektrischen Leiterelemente, welche die einzelnen Leiterenden definieren und welche elektrischen Leiterelemente vorzugsweise als Formstab-Leiter ausgeführt sind, teilweise in einem Statorkern aufgenommen und von dessen Aufnahmenuten gehaltert bzw. vorpositioniert. Dies begünstigt eine rationelle Herstellung von Statoren für elektrische Maschinen, also von Statorkernen mit daran angebrachten elektrischen Wicklungen.

Entsprechend einer weiterführenden Verfahrensmaßnahme kann vorgesehen sein, dass nach dem Positionieren der Leiterenden ein Schweißprozess ohne Zugabe von Zusatzmitteln ausgeführt wird, wobei insbesondere paar- oder gruppenweise aneinander anliegende Leiterenden in einem Laserschweißprozess elektrisch leitend miteinander verbunden werden. Durch die angegebenen Positionierungsmaßnahmen für die Leiterenden kann ein solcher Schweißprozess rasch und mit konstant hoher Qualität ausgeführt werden. Insbesondere werden unerwünschte Spalte zwischen stoffschlüssig und elektrisch miteinander zu verbindenden Paaren bzw. Gruppen von Leiterenden zuverlässig hintan gehalten.

Zum besseren Verständnis der Erfindung wird diese anhand der nachfolgenden Figuren näher erläutert.

Es zeigen jeweils in vereinfachter, schematischer und beispielhafter Darstellung:
Fig. 1 eine Positioniervorrichtung für die Leiterenden einer herzustellenden Formstab-Wicklung in perspektivischer Ansicht auf die Oberseite;
Fig. 2 die Positioniervorrichtung nach Fig. 1 in perspektivischer Ansicht auf dessen Unterseite;
Fig. 3 die Positioniervorrichtung nach Fig. 1 in Seitenansicht in Kombination mit einem Statorkern und einer darin aufgenommenen, mit der Positioniervorrichtung zu bearbeitenden, teilweise hergestellten Formstab-Wicklung;
Fig. 4 ein Detail der Positioniervorrichtung nach Fig. 1 mit darin eingeführten Paaren von Leiterenden;
Fig. 5 das Detail gemäß Fig. 5 aus anderer Perspektive;
Fig. 6 eine vergrößerte Detaildarstellung der in Art von Fischgräten bzw. Doppelkämmen ausgeführten Positionierelemente der Positioniervorrichtung nach Fig. 1 und einer Gruppe bzw. Matrix von dazwischen aufgenommenen Leiterenden;
Fig. 7 eine Gruppe von Positionierelementen der Positioniervorrichtung nach Fig. 1, wobei das rechts vorgesehene Paar von Positionierelementen ausgeblendet wurde und wobei eine Gruppe bzw. Matrix von zu positionierenden Leiterenden eingefädelt ist;
Fig. 8 ein Detail der Positioniervorrichtung nach Fig. 1 in Ansicht von unten mit mehreren Positionierschlitzen und darin eingeführten Leiterelementen;
Fig. 9 ein Detail eines Radial-Vorpositionierungselementes der Positioniervorrichtung nach Fig. 1 in einer Schnittdarstellung und in Ansicht von unten;
Fig. 10 einen Schnitt durch die Positioniervorrichtung nach Fig. 1 in radialer Richtung mit paarweise angeordneten Leiterenden innerhalb von Positionierfenstern von zusammenwirkenden Positionierelementen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

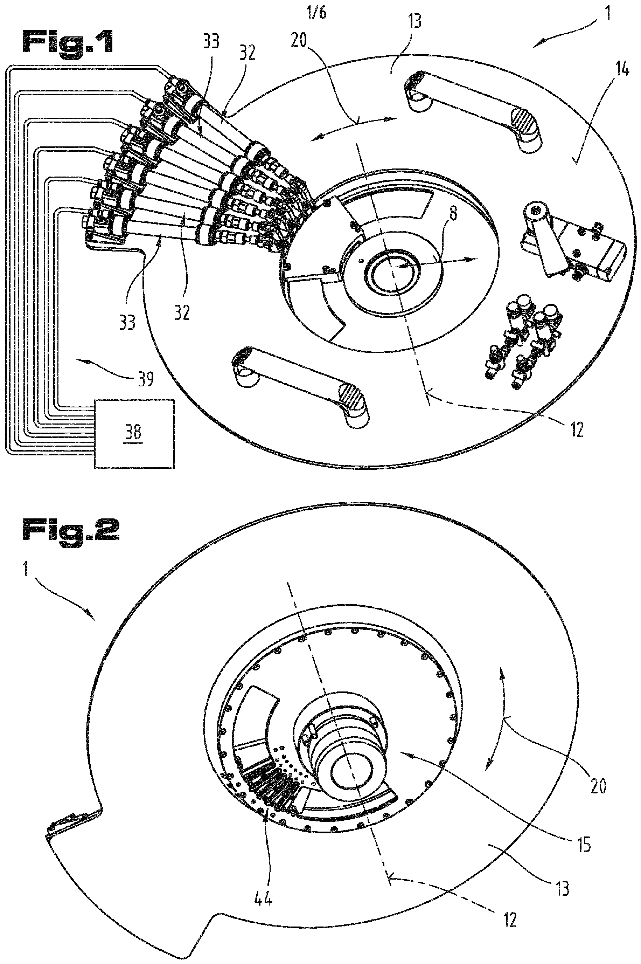

In den Fig. 1 bis 3 ist ein Ausführungsbeispiel einer Positioniervorrichtung 1 veranschaulicht, welche zum Positionieren von Leiterenden 2 im Zuge der Herstellung einer elektrischen Wicklung 3 für eine elektrische Maschine vorgesehen ist. Die Positioniervorrichtung 1 positioniert dabei typischerweise Paare von Leiterenden 2 an deren Soll- bzw. Planpositionen, sodass ein anschließender Schweißprozess, insbesondere ein Laser-Schweißprozess ohne Verwendung von Zusatzwerkstoffen, möglichst prozesssicher ausgeführt werden kann. Im Zuge dieses Schweißprozesses werden die zwei unmittelbar aneinander anliegende Leiterenden 2 der jeweiligen Paare von Leiterenden 2 stoffschlüssig bzw. elektrisch leitend miteinander verbunden. Die einzelnen Leiterenden 2 stehen während dem Positionier- und Schweißprozess vorzugsweise in Axialrichtung - Pfeil 11 - gegenüber einem axialen Ende eines im Wesentlichen hohlzylindrischen Statorkerns 4 vor. Die einzelnen Leiterenden 2 sind durch die axialen Endabschnitte von Formstab-Leiterelementen gebildet, welche Formstab-Leiterelemente typischerweise aus Kupfer gebildet sind. Insbesondere können die Formstab-Leiterelemente durch sogenannte Hair-Pins oder I-Pins einer Formstab-Wicklung 3 gebildet sein. Die in Axialrichtung vom Statorkern 4 abstehenden Leiterenden 2 dieser Hair-Pins bzw. I-Pins sind elektrisch zu verbinden, insbesondere miteinander zu verschweißen, um dadurch eine sogenannte Formstab-Wicklung 3 aufzubauen. Beispielsgemäß ist diese Formstab-Wicklung 3 als Stator-Wicklung ausgeführt.

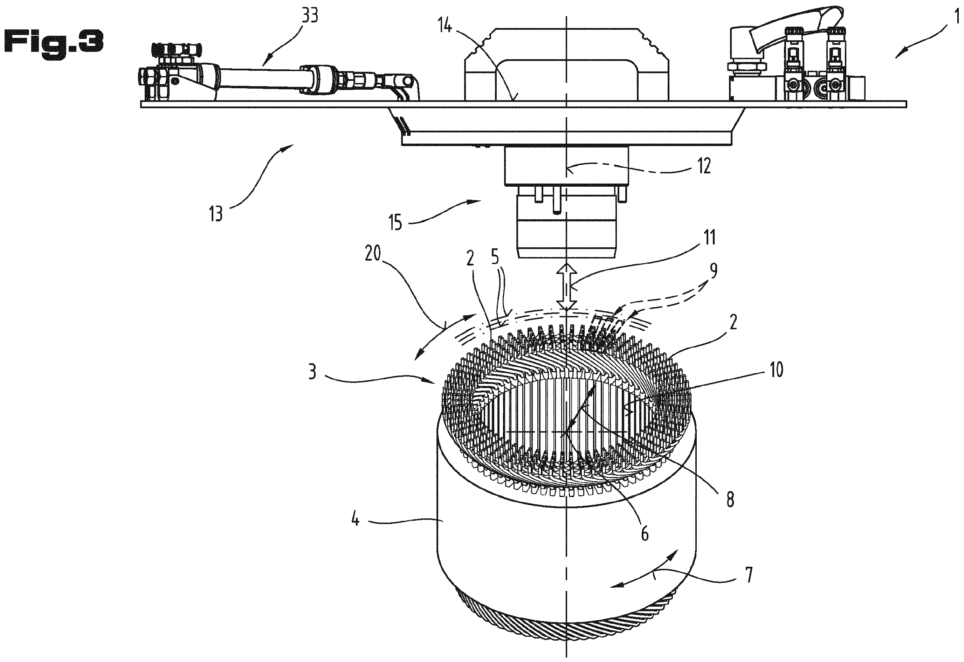

Wie am besten aus Fig. 3 ersichtlich ist, sind die zu positionierenden Leiterenden 2 bzw. Gruppen von Leiterenden 2, insbesondere jeweils Paare von Leiterenden 2, entlang von mehreren Kreisbahnen 5 mit einem gemeinsamen Zentrumspunkt 6 angeordnet. Zudem sind diese Leiterenden 2 bzw. Gruppen von Leiterenden 2 in Bezug auf die Kreisumfangsrichtung 7 des Statorkerns 4 bzw. der Kreisbahnen 5 voneinander beabstandet. Dementsprechend sind in Radialrichtung 8 zu den Kreisbahnen 5 verlaufende Sektionen 9 bzw. Radialgruppen von Leiterenden 2 gebildet. Diese Sektionen 9 bzw. Gruppen von Leiterenden 2 sind entlang der Kreisumfangsrichtung 7 der Kreisbahnen 5 bzw. des Statorkerns 4 verteilt angeordnet. Dementsprechend sind am Statorkern 4 bzw. innerhalb von dessen Aufnahmenutten 10 jeweils mehrere Formstab-Leiterelemente angeordnet, welche in axialer Richtung die Leiterenden 2 bzw. Gruppen von Leiterenden 2 ausbilden.

Wie weiters am besten aus Fig. 3 ersichtlich ist, kommt die Positioniervorrichtung 1 zum Einsatz, nachdem die von eine axialen Ende des Statorkerns 4 vorstehenden Leiterenden 2 in Kreisumfangsrichtung 7 des Statorkerns 4 gegenüber der jeweiligen Aufnahmenut 10 seitenversetzt gebogen wurden, also nachdem ein sogenannter getwisteter Wicklungskopf der herzustellenden Formstab-Wicklung 3 vorliegt. Ein dementsprechend vorliegender Stator stellt ein Halbfabrikat dar, bei welchem die "getwisteten" Leiterenden 2 typischerweise paarweise zu einer elektrisch definierten, üblicherweise mehrphasigen Formstab-Wicklung 3 zu verbinden sind.

Zur Unterstützung des Schweißprozesses bzw. zur qualitativen Absicherung dieses Verbindungsvorganges ist die Positioniervorrichtung 1 vorgesehen, welche auf ein in Fig. 3 beispielhaft dargestelltes Stator-Halbfabrikat in Axialrichtung 11 aufsetz- bzw. aufsteckbar ist. Die Axialrichtung 11 ist dabei entlang einer Zentralachse 12 der Positioniervorrichtung 1 definiert. Im einsatzbereiten Zustand der Positioniervorrichtung 1 verlaufen die Zentralachse 12 der Positioniervorrichtung 1 und die Mittelachse des hohlzylindrischen Stator-Halbfabrikats deckungsgleich bzw. in Verlängerung zueinander.

Die Positioniervorrichtung 1 umfasst einen ein- bzw. mehrteiligen Tragkörper 13, welcher eine Tragebene 14 definiert. Die Zentralachse 12 der Positioniervorrichtung 1 verläuft senkrecht zur Tragebene 14.

Die Positioniervorrichtung 1 kann insbesondere an dessen Unterseite eine Zentrier- und/oder Klemmvorrichtung 15 aufweisen, durch welche eine plangemäße axiale und radiale Ausrichtung und/oder Klemmung der Positioniervorrichtung 1 relativ zum Statorkern 4 hergestellt werden kann. Nachfolgend kann mit der Positioniervorrichtung 1 der vorgesehene Justier- bzw. Ausrichtvorgang gegenüber den Leiterenden 2 ausgeführt werden.

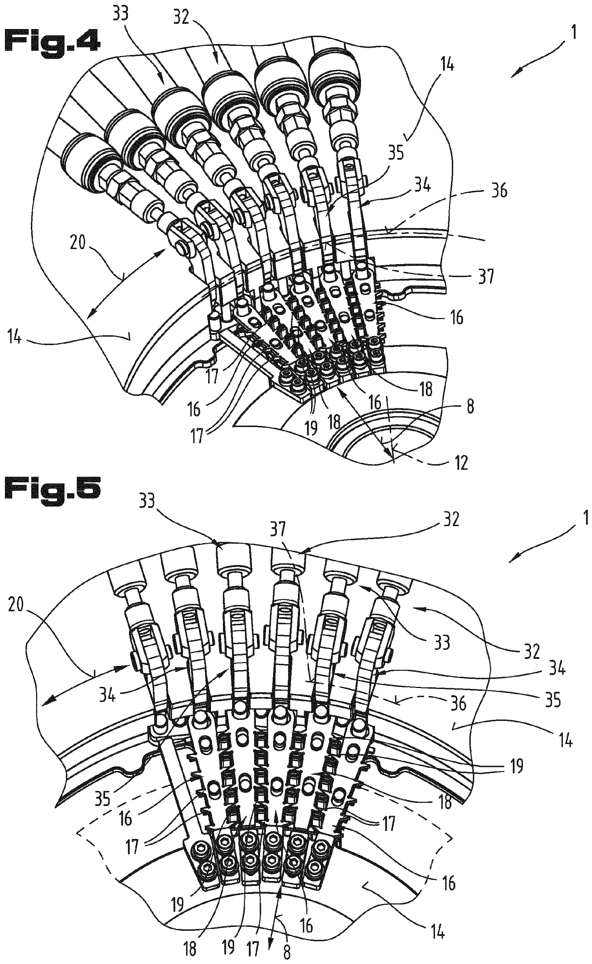

Wie am besten den Fig. 4 bis 7 zu entnehmen ist, umfasst die Positioniervorrichtung 1 mehrere identisch ausgeführte erste Positionierelemente 16, welche jeweils mehrere erste Positioniervorsprünge 17 an deren Seitenrändern aufweisen. Die finger- bzw. zungenartigen Positionierelemente 16 verlaufen radial zu der Zentralachse 12 des Tragkörpers 13. Dementsprechend sind mehrere radial verlaufende Stellfinger mit ersten, seitlich abstehenden Vorsprüngen bzw. Zacken ausgebildet.

Die Positioniervorrichtung 1 umfasst weiters mehrere zweite Positionierelemente 18 die jeweils mehrere zweite Positioniervorsprünge 19 aufweisen. Diese Mehrzahl an zweiten Positionierelementen 18 verläuft jeweils radial zu der Zentralachse 12 des Tragkörpers 13. Dementsprechend sind mehrere zweite, radial verlaufende Stellfinger mit andersartig geformten zweiten Vorsprüngen bzw. Zacken an den seitlichen Randabschnitten ausgebildet.

Entlang einer Kreisumfangsrichtung 20 in der Tragebene 14 bzw. parallel zur Tragebene 14 sind abwechselnd eine Mehrzahl von ersten und zweiten Positionierelementen 16, 18 angeordnet. Im dargestellten Ausführungsbeispiel sind drei erste Positionierelemente 16 und zwei zweite Positionierelemente 18 abwechselnd angeordnet, sodass die innerhalb von vier benachbarten Aufnahmenuten 10 angeordneten Formstab-Leiterelemente bearbeitet bzw. plangemäß positioniert werden können. Anstelle dieser sektoralen Ausbildung von Positionierelementen 16, 18 und einer sektoralen Abdeckung des Statorkerns 4 ist es alternativ auch möglich, eine Positioniervorrichtung 1 vorzusehen, welche den gesamten Umfangsbereich bzw. sämtliche Aufnahmenuten 10 eines Statorkerns 4 abdeckt bzw. auf einmal bearbeitet. Wenn sich die Positioniervorrichtung 1 mit ihren abwechselnd angeordneten ersten und zweiten Positionierelementen 16, 18 über 360° erstreckt, kann ein sektorales Weiterdrehen der Positioniervorrichtung 1 bzw. des Statorkerns 4 erübrigt werden und eine rasche bzw. simultane Ausrichtung aller Leiterenden 2 eines Statorkerns 2 vorgenommen werden.

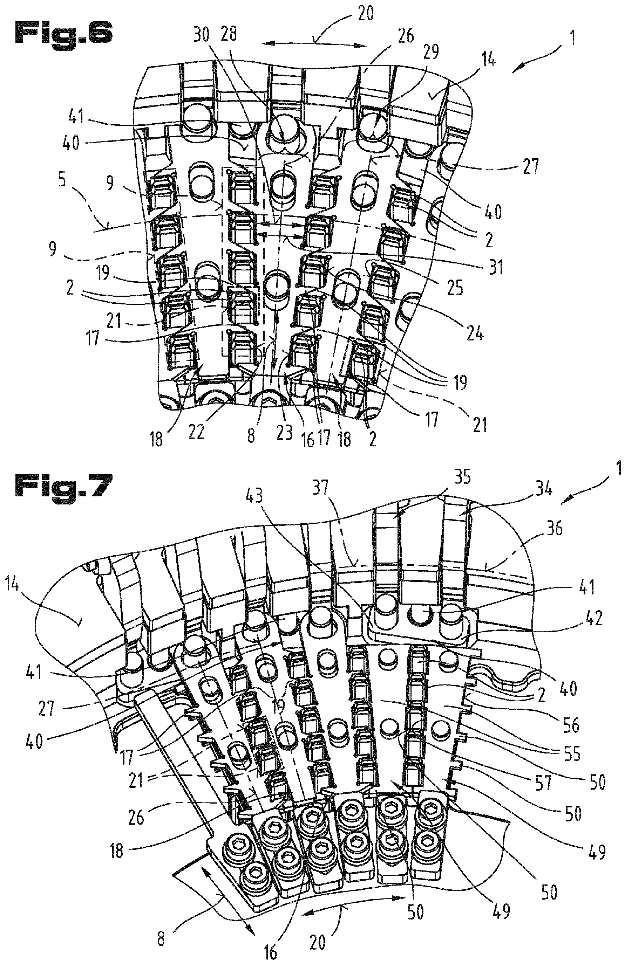

Wie am besten aus Fig. 6 zu entnehmen ist, bilden jeweils zwei in Radialrichtung 8 zueinander beabstandete erste und zweite Positioniervorsprünge 17, 19 größenveränderbare Positionierfenster 21 aus. Insbesondere bilden mehrere Paare aus ersten und zweiten Positioniervorsprüngen 17, 19 mehrere größenveränderbare Positionierfenster 21 aus. Diese größenveränderbaren Positionierfenster 21 sind jeweils zur Hindurchführung von wenigstens einem Leiterende 2, typischerweise von zwei miteinander zu verschweißenden Leiterenden 2, vorgesehen.

Wie ebenso am besten aus Fig. 6 ersichtlich ist, weisen die ersten Positionierelemente 16 an ihren beiden im Wesentlichen radial zur Zentralachse 12 verlaufenden Längsseiten 22, 23 jeweils mehrere der ersten Positioniervorsprünge 17 auf. Die zweiten Positionierelemente 18 weisen an ihren beiden im Wesentlichen radial zur Zentralachse 12 verlaufenden Längsseiten 24, 25 jeweils mehrere der zweiten Positioniervorsprünge 19 auf. Dementsprechend weisen die ersten und zweiten Positionierelemente 16, 18 jeweils eine Doppelkammstruktur bzw. eine Fischgrät-Kontur auf.

Die ersten und zweiten Positioniervorsprünge 17, 19 weisen zueinander gespiegelte Zackenformen bzw. gegengleiche Dreieckskonturen auf. In Kreisumfangsrichtung 20 nächstliegende bzw. unmittelbar benachbarte, im Wesentlichen dreieckige Positioniervorsprünge 17, 19 definieren in Summe eine im Wesentlichen rechteckige Gesamtform mit einer diagonal verlaufenden Trennebene, wie dies in Fig. 6 beispielhaft dargestellt ist. Die ersten und zweiten Positioniervorsprünge 17, 19 sind unterschiedlich geformt bzw. in Bezug auf die Längsmittelachsen 26, 27 unterschiedlich orientiert.

Den Fig. 4 bis 7 ist weiters zu entnehmen, dass jeweils nur ein erstes oder nur ein zweites Positionierelement 16, 18 zur Platzierung bzw. Einführung zwischen zwei in Kreisumfangsrichtung 20 unmittelbar benachbarten, radial verlaufenden Sektionen 9 von Leiterenden 2 vorgesehen ist. Eine solche Sektion 9 von Leiterenden 2 bezieht sich auf alle Leiterenden 2, die von den in einer Aufnahmenut 10 angeordneten Formstab-Leiterelementen ausgebildet werden können. Bei der gemäß Fig. 6 beispielsweise 10-lagigen Formstab-Wicklung 3 umfasst eine Sektion 9 insgesamt zehn Leiterenden 2 bzw. fünf Leiterenden-Paare. In die radial verlaufenden Zwischenräume zwischen zwei Kreisumfangsrichtung 20 voneinander beabstandeten Sektionen 9 werden also abwechselnd erste und zweite Positionierelemente 16, 18 eingebracht, wenn die Positioniervorrichtung 1 auf ein zu bearbeitendes Stator-Halbfabrikat axial aufgesetzt bzw. aufgesteckt wird, wie dies aus Fig. 3 schematisch ersichtlich ist. Dementsprechend sind ausschließlich erste Positionierelemente 16 oder ausschließlich zweite Positionierelemente 18 in wechselnder Folge in die radial verlaufenden Zwischenräume zwischen zwei in Kreisumfangsrichtung 20 voneinander beabstandeten Sektionen 9 aus Leiterenden 2 einzubringen bzw. einzuführen. Pro Zwischenraum zwischen zwei Sektionen 9 aus Leiterenden 2 ist somit ein einziges erstes oder ein einziges zweites Positionierelement 16 oder 18 anzuordnen.

Insbesondere ist bei der dargestellten Positioniervorrichtung 1 jeweils nur ein einziges beidseitig gezacktes Positionierelement 16 oder 18 vorgesehen, welches zwischen in Kreisumfangsrichtung 20 unmittelbar benachbarten Radialgruppen bzw. Sektionen 9 von Leiterenden 2 platzierbar ist. Dadurch sind in Bezug auf die Kreisumfangsrichtung 20 breiter ausführbare Positionierelemente 16, 18 ermöglicht.

Wie ebenfalls aus Fig. 6 gut ersichtlich ist, sind die ersten Positioniervorsprünge 17 und vorzugsweise auch die zweiten Positioniervorsprünge 19 in Bezug auf Längsmittelachsen 26, 27 der ersten bzw. der zweiten Positionierelemente 16, 18 symmetrisch positioniert und symmetrisch geformt. Die ersten und die zweiten Positionierelemente 16, 18 können somit jeweils spiegelsymmetrisch in Bezug auf deren Längsmittelachsen 26 bzw. 27 ausgeführt sein.

Die ersten und zweiten Positionierelemente 16, 18 weisen jeweils einen zentralen Tragabschnitt 28, 29 auf, welcher im Wesentlichen von den Längsseiten 22, 23 seitlich begrenzt wird. Der zentrale Tragabschnitt 28, 29 kann auch exklusive der seitlichen Positioniervorsprünge 17, 19 verstanden werden. Eine parallel zur Tragebene 14 der Positioniervorrichtung 1 gemessene Mindestbreite 30 eines zentralen Tragabschnittes 28, 29 des ersten und/oder zweiten Positionierelementes 16, 18 beträgt mehr als 50%, vorzugsweise mehr als 60%, insbesondere zwischen 70% bis 99%, einer lichten Weite 31 zwischen zwei in Kreisumfangsrichtung 20 unmittelbar benachbarten, auf einer gemeinsamen Kreisbahn 5 liegenden Leiterenden 2. Die besagte Mindestbreite 30 des zentralen Tragabschnittes 28, 29 ist dabei auf die besagte, gemeinsame Kreisbahn 5 bezogen. Dementsprechend kann jedes der Positionierelemente 16, 18 eine relativ große Breite in Bezug auf deren Tragabschnitte 28, 29 und in Bezug auf die Breite bzw. lichte Weite 31 der Zwischenräume zwischen zwei Sektionen 9 aufweisen.

Den Darstellungen in den Fig. 1, 4 und 5 ist zu entnehmen, dass jedem der ersten Positionierelemente 16 und jedem der zweiten Positionierelemente 18 jeweils ein Linear-Verstellantrieb 32, 33, beispielsgemäß jeweils ein pneumatisch betätigbarer Stellzylinder, derart zugeordnet ist, dass jedes der ersten und zweiten Positionierelemente 16, 18 in Radialrichtung 8 zur Zentralachse 12 verstellbar ist. Die Linear-Verstellantriebe 32, 33 sind vorzugsweise in der jeweiligen radialen Verlängerung zu den fingerartigen Positionierelementen 16, 18 angeordnet. Wie am besten auf Fig. 5 ersichtlich ist, kann jedes der Positionierelemente 16, 18 über eine Koppelungsmechanik, wie sie nachfolgend beispielhaft angegeben wird, mit zwei Linear-Verstellantrieben 32, 33 gekoppelt sein. Die Linear-Verstellantriebe 32, 33 können dadurch einfachwirkend ausgeführt sein, also einfachwirkende Zylinder sein, und kann trotzdem eine bidirektionale, radiale Verstellbarkeit für die entsprechend gepaarten ersten und zweiten Positionierelemente 16, 18 erzielt werden.

Den Abbildungen gemäß den Fig. 4 und 5 ist zu entnehmen, dass jedes der ersten und zweiten Positionierelemente 16, 18 unter Zwischenschaltung von jeweils einem Schwenkhebel 34, 35 mit einem der genannten Linear-Verstellantriebe 32, 33 bewegungsgekoppelt ist. Die einzelnen Schwenkhebel 34, 35 weisen jeweils eine parallel zur Tragebene 14 und quer zur Radialrichtung 8 verlaufende Schwenkachse 36, 37 auf.

Wie der schematischen Darstellung gemäß Fig. 1 zu entnehmen ist, kann eine zentrale Steuervorrichtung 38 ausgebildet sein, welche dazu eingerichtet ist, jeden der Linear-Verstellantriebe 32, 33 unabhängig voneinander zu aktivieren und abzuschalten. Hierzu ist die Steuervorrichtung 38, welche elektrisch betätigbare Pneumatikventile umfassen kann, über mehrere Leitungen 39, insbesondere über Pneumatikleitungen, mit den Linear-Verstellantrieben 32, 33 gekoppelt. Dadurch ist es ermöglicht, jedes der Positionierelemente 16, 18 in Radialrichtung 8 nach innen und nach außen zu verstellen. Durch die über eine Koppelungsmechanik, insbesondere über eine Kopplungswippe 40 - Fig. 7 - paarweise bewegungsgekoppelten Positionierelemente 16, 18 werden derart miteinander gepaarte Positionierelemente 16, 18 zwangsweise in jeweils entgegen gesetzte radiale Richtungen 8 bewegt.

Wie vor allem der Fig. 7 zu entnehmen ist, kann zwischen Paaren von in Kreisumfangsrichtung 20 unmittelbar benachbarten ersten und zweiten Positionierelementen 16, 18 jeweils eine Kopplungswippe 40 ausgebildet sein, welche zur Erzwingung von gegenläufigen radialen Bewegungen des ersten und zweiten Positionierelementes 16 , 18 innerhalb eines Paares aus ersten und zweiten Positionierelementen 16, 18 vorgesehen ist. Zur besseren Veranschaulichung wurde dabei in Fig. 7 das rechts normalerweise angeordnete Paar von Positionierelementen 16, 18 ausgeblendet, sodass die hier zugeordnete Kopplungswippe 40 deutlich ersichtlich ist.

Die einzelnen Kopplungswippen 40 je Paar aus Positionierelementen 16, 18 weisen jeweils eine parallel zur Zentralachse 12 verlaufende Wippachse 41 auf. Ein erster Endabschnitt 42 der Kopplungswippen 40 ist mit dem ersten Positionierelement 16 gelenkig verbunden und ein zweiter Endabschnitt 43 der Kopplungswippen 40 ist mit dem zweiten Positionierelement 18 gelenkig verbunden. Diese Gelenksverbindungen können als korrespondierende Bolzen- und Langloch-Verbindungen ausgeführt sein, wie dies einer Zusammenschau der Fig. 5 bis 7 entnehmbar ist.

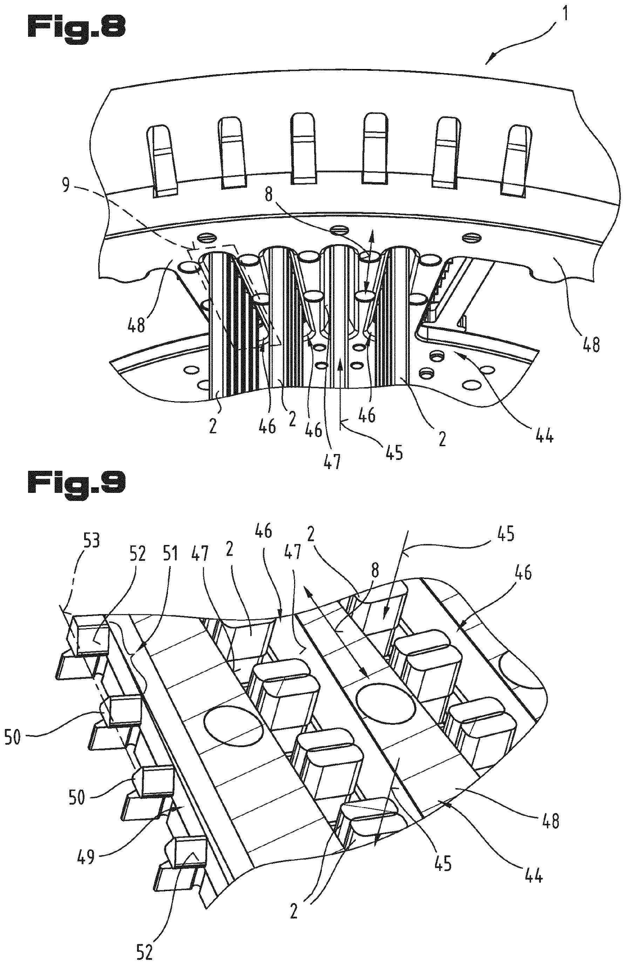

In den Fig. 8 und 9 sind Detailausschnitte der Unterseite der Positioniervorrichtung 1 (gemäß Fig. 2) dargestellt. Daraus ist ersichtlich, dass die Positioniervorrichtung 1 eine Vorpositionierungs-Vorrichtung 44 aufweisen kann, welche in Bezug auf eine Einführrichtung 45 von Leiterenden 2 in die Positionierfenster 21 der paarbildenden Positionierelemente 16, 18 - siehe Fig. 6 - vor diesen Positionierfenstern 21 angeordnet ist. Insbesondere kann die Vorpositionierungs-Vorrichtung 44 mehrere radial zur Zentralachse 12 verlaufende Positionierschlitze 46 aufweisen, welche Positionierschlitze 46 jeweils zum Einführen von sektoralen Gruppen bzw. Sektionen 9 von Leiterenden 2 vorgesehen sind.

Wie am besten aus Fig. 9 ersichtlich ist, können die Positionierschlitze 46 wenigstens an einzelnen ihrer Begrenzungswände Einführfasen 47 für Leiterenden 2 aufweisen. Diese Einführfasen 47 bilden in Bezug auf die Einführrichtung 45 der Leiterenden 2 sich verjüngende Positionierschlitze 46 aus. Die Einführfasen 47 können durch winkelig zur Tragebene 14 verlaufende Begrenzungswände in den Positionierschlitzen 46 gebildet sein. Die Positionierschlitze 46 können in mehreren, zusammengefügten Teilplatten ausgebildet sein. Wie in Fig. 8 schematisch dargestellt, können auch alle Positionierschlitze 46 in einer einzigen bzw. in einer einteiligen Trag- bzw. Positionierplatte 48 ausgebildet sein.

Wie einer Zusammenschau der Fig. 7, 9 und 10 zu entnehmen ist, kann die Positioniervorrichtung 1 mehrere Radial-Vorpositionierungselemente 49 für die Leiterenden 2 bzw. für Paare von Leiterenden 2 aufweisen. Diese Radial-Vorpositionierungselemente 49 weisen entlang der Kreisumfangsrichtung 20 orientierte Positionierstege 50 auf, wobei zwischen zwei in Radialrichtung 8 unmittelbar benachbarten Positionierstegen 50 ein Einführbereich 51 für ein Paar aus zwei in Radialrichtung 8 unmittelbar benachbarte Leiterenden 2 ausgebildet ist. Die Positionierstege 50 weisen jeweils wenigstens eine Einführfase 52 auf, sodass die Einführbereiche 51 für Paare von Leiterenden 2 entlang der Einführrichtung 45 sich verjüngend ausgebildet sind.

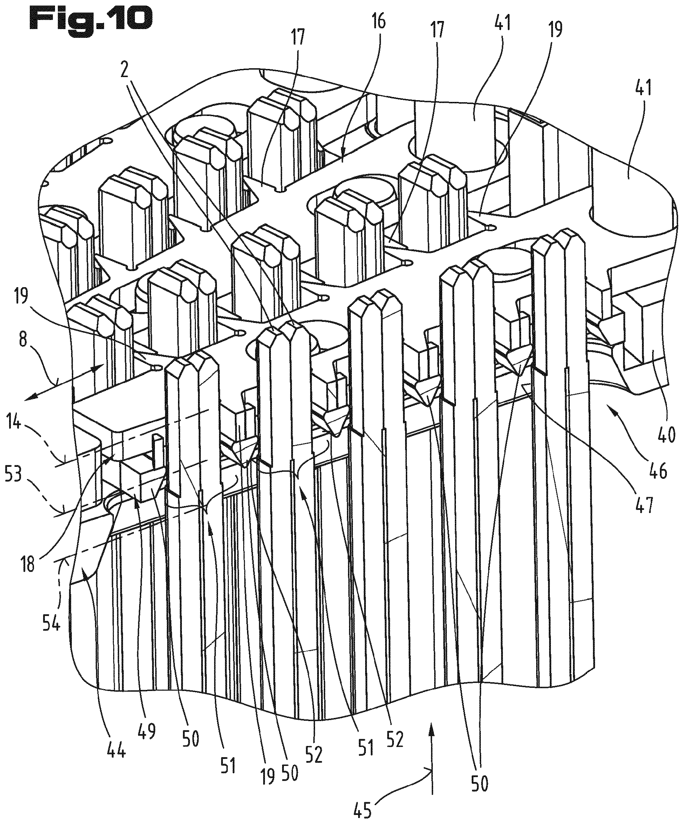

Wie am besten dem rechten Abschnitt von Fig. 7 mit zwei ausgeblendeten Positionierelementen zu entnehmen ist, können die Radial-Vorpositionierungselemente 49 hinsichtlich der ersten und zweiten Positionierelemente 16, 18 als baulich eigenständige Elemente ausgeführt sein. Insbesondere kann vorgesehen sein, dass die einzelnen finger- bzw. zungenartigen Radial-Vorpositionierungselemente 49 - Fig. 7, 10 - innerhalb einer zentralen Bauteilebene 53 angeordnet sind, welche zentrale Bauteilebene 53 zwischen der Tragebene 14 mit den ersten und zweiten Positionierelementen 16, 18 und einer unteren Bauteilebene 54 mit den Positionierschlitzen 46 angeordnet ist, wie dies am besten Fig. 10 zu entnehmen ist.

Der Fig. 7 ist ebenso entnehmbar, dass die Radial-Vorpositionierungselemente 49 jeweils einen radial zur Zentralachse 12 verlaufenden Tragabschnitt 55 aufweisen. An beiden radialen Längsrändern 56, 57 eines Tragabschnittes 55 sind jeweils eine Mehrzahl von Positionierstegen 50 ausgebildet. Die einzelnen Radial-Vorpositionierungselemente 49 und/oder die gesamte Vorpositionierungs-Vorrichtung 44 ist in Bezug auf die Zentralachse 12 vorzugsweise unbeweglich ausgebildet bzw. starr befestigt.

Im nachfolgenden wird ein Verfahren zum Herstellen einer elektrischen Wicklung 3 bzw. zum Bearbeiten eines Halbfabrikats einer elektrischen Wicklung 3 einer elektrischen Maschine erläutert. Dieses Herstellungs- bzw. Positionierverfahren umfasst folgende Verfahrensschritte:
- Bereitstellen von elektrischen Leiterelementen, deren Leiterenden 2 oder Gruppen bzw. Paare von Leiterenden 2 entlang von mehreren Kreisbahnen 5 mit einem gemeinsamen Zentrumspunkt 12 angeordnet und dabei in Kreisumfangsrichtung 20 voneinander beabstandet sind, sodass in Radialrichtung 8 zu den Kreisbahnen 5 verlaufende Sektionen 9 bzw. Radialgruppen von Leiterenden 2 gebildet sind, welche radial verlaufenden Sektionen 9 entlang der Kreisumfangsrichtung 20 der Kreisbahnen 5 verteilt angeordnet sind,
- Bereitstellen einer Positioniervorrichtung 1, welche insbesondere nach wenigstens einem der Ansprüche ausgebildet ist, und zumindest folgende Merkmale umfasst:
- einen Tragkörper 13, welcher eine Tragebene 14 und eine senkrecht zu der Tragebene 14 verlaufende Zentralachse 12 definiert,
- mehrere erste Positionierelemente 16 die jeweils mehrere erste Positioniervorsprünge 17 aufweisen, und welche ersten Positionierelemente 16 radial zu der Zentralachse 12 des Tragkörpers 13 verlaufen,
- mehrere zweite Positionierelemente 18 die jeweils mehrere zweite Positioniervorsprünge 19 aufweisen, und welche zweiten Positionierelemente 18 radial zu der Zentralachse 12 des Tragkörpers 13 verlaufen,
- wobei entlang einer Kreisumfangsrichtung 20 innerhalb der Tragebene 14 abwechselnd eine Mehrzahl von ersten und zweiten Positionierelementen 16, 18 angeordnet ist, und
- wobei Paare aus ersten und zweiten Positioniervorsprüngen 17, 19 größenveränderbare Positionierfenster 21 ausbilden, welche jeweils zur Hindurchführung von wenigstens einem Leiterende 2 vorgesehen sind, vorzugsweise zur Hindurchführung von zwei fest zu verbindenden Leiterenden 2 vorgesehen sind,
- wobei die ersten Positionierelemente 16 an ihren beiden im Wesentlichen radial zur Zentralachse 12 verlaufenden Längsseiten 22, 23 jeweils mehrere der ersten Positioniervorsprünge 17 aufweisen,
- wobei die zweiten Positionierelemente 18 an ihren beiden im Wesentlichen radial zur Zentralachse 12 verlaufenden Längsseiten 24, 25 jeweils mehrere der zweiten Positioniervorsprünge 19 aufweisen,
- wobei jeweils nur ein einziges erstes oder zweites Positionierelement 16 oder 18 zwischen zwei in Kreisumfangsrichtung 20 unmittelbar benachbarten, radial verlaufenden Gruppen bzw. Sektionen 9 von Leiterenden 2 eingeführt und positioniert wird,
- und wobei durch radiales Verschieben und gesteuertes Positionieren der ersten und zweiten Positionierelemente 16 und 18 die zwischen den ersten und zweiten Positioniervorsprüngen 17, 19 angeordneten Leiterenden 2, das heißt die in den jeweiligen Positionierfenstern 21 angeordneten Leiterenden 2, in deren Sollpositionen in Bezug auf die Radialrichtung 8 der jeweiligen Kreisbahnen 5 verbracht werden,
- dauerhaftes Verbinden, insbesondere automatisiertes Verschweißen von entsprechend positionierten Gruppen bzw. Paaren von Leiterenden 2, vorzugsweise unter Einsatz von Laserstrahlung.

Ein kooperierendes bzw. zusammenwirkendes Paar aus Positionierelementen 16, 18 verbringt dabei die miteinander zu verbindenden Paare aus Leiterenden 2 an ihre Soll-Radialpositionen relativ zum Zentralachse 12. Die jeweils links und rechts zu der Längsmittelachse 26 der ersten Positionierelemente 16 angeordneten Leiterenden 2 werden mittels den ersten Positioniervorsprüngen 17 in Radialrichtung zur Zentralachse 12 nach außen positioniert, während die jeweils links und rechts zu der Längsmittelachse 27 der zweiten Positionierelemente 18 angeordneten Leiterenden 2 mittels den zweiten Positioniervorsprüngen 19 in Radialrichtung zur Zentralachse 12 innen positioniert werden. Durch die in Radialrichtung 8 maximal verkleinerten bzw. in ihrer lichten Weite reduzierten Positionierfenster 21 werden die darin angeordneten Leiterenden 2 geklemmt bzw. spaltfrei aneinander gedrückt.

Das Positionier- bzw. Bearbeitungsverfahren findet statt, während die elektrischen Leiterelemente in den Aufnahmenuten 10 eines hohlzylindrischen Statorkerns 4 aufgenommen bzw. gehaltert sind. Eine Mehrzahl von Leiterenden 2 der elektrischen Leiterelemente wird dabei anhand der Aufnahmenuten 10 in radialer Richtung 8 und in Kreisumfangsrichtung 20 vorpositioniert.

Nach der plangemäßen Positionierung der Leiterenden 2 mittels der Positioniervorrichtung 1 wird ein Schweißprozess ausgeführt, welcher vorzugsweise ohne Zugabe von Zusatzmitteln erfolgt. Insbesondere werden dabei paar- oder gruppenweise aneinander anliegende, insbesondere möglichst spaltfrei aneinander gedrückte Leiterenden 2 in einem Laserschweißprozess dauerhaft gekoppelt und elektrisch leitend miteinander verbunden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Positioniervorrichtung | | |
| 2 | Leiterenden | 36 | Schwenkachse |
| 3 | Wicklung | 37 | Schwenkachse |
| 4 | Statorkern | 38 | Steuervorrichtung |
| 5 | Kreisbahn | 39 | Leitungen |
| 6 | Zentrumspunkt | 40 | Kopplungswippe |
| 7 | Kreisumfangsrichtung | | |
| 8 | Radialrichtung | 41 | Wippachse |
| 9 | Sektionen | 42 | erster Endabschnitt |
| 10 | Aufnahmenuten | 43 | zweiter Endabschnitt |
| | | 44 | Vorpositionierungs-Vorrichtung |
| 11 | Axialrichtung | 45 | Einführrichtung |
| 12 | Zentralachse | 46 | Positionierschlitze |
| 13 | Tragkörper | 47 | Einführfasen |
| 14 | Tragebene | 48 | Positionierplatte |
| 15 | Zentrier- und/oder Klemmvorrich- tung | 49 | Radial-Vorpositionierungselemente |
| | | 50 | Positionierstege |
| 16 | erste Positionierelemente | 51 | Einführbereich |
| 17 | erste Positioniervorsprünge | 52 | Einführfase |
| 18 | zweite Positionierelemente | 53 | zentrale Bauteilebene |
| 19 | zweite Positioniervorsprünge | 54 | untere Bauteilebene |
| 20 | Kreisumfangsrichtung | 55 | Tragabschnitt |
| 21 | Positionierfenster | 56 | Längsrand |
| 22 | Längsseite | 57 | Längsrand |
| 23 | Längsseite | | |
| 24 | Längsseite | | |
| 25 | Längsseite | | |
| 26 | Längsmittelachse | | |
| 27 | Längsmittelachse | | |
| 28 | Tragabschnitt | | |
| 29 | Tragabschnitt | | |
| 30 | Mindestbreite | | |
| 31 | lichten Weite | | |
| 32 | Linear-Verstellantrieb | | |
| 33 | Linear-Verstellantrieb | | |
| 34 | Schwenkhebel | | |
| 35 | Schwenkhebel | | |

## Patentansprüche

1. Positioniervorrichtung (1) zum Positionieren von Leiterenden (2) im Zuge der Herstellung einer elektrischen Wicklung (3) für eine elektrische Maschine,
- welche Leiterenden oder Gruppen von Leiterenden (2) entlang von mehreren Kreisbahnen (5) mit einem gemeinsamen Zentrumspunkt (6) angeordnet und dabei in Kreisumfangsrichtung (20) der Kreisbahnen (5) voneinander beabstandet sind, sodass in Radialrichtung (8) zu den Kreisbahnen (5) verlaufende Sektionen (9) von Leiterenden gebildet sind, welche radial verlaufenden Sektionen (9) entlang der Kreisumfangsrichtung (20) der Kreisbahnen (5) verteilt angeordnet sind, wobei die Positioniervorrichtung (1) folgendes umfasst:
- einen Tragkörper (13), welcher eine Tragebene (14) und eine senkrecht zu der Tragebene (14) verlaufende Zentralachse (12) definiert,
- mehrere erste Positionierelemente (16) die jeweils mehrere erste Positioniervorsprünge (17) aufweisen, welche ersten Positionierelemente (16) radial zu der Zentralachse (12) des Tragkörpers (13) verlaufen,
- mehrere zweite Positionierelemente (18) die jeweils mehrere zweite Positioniervorsprünge (19) aufweisen, welche zweiten Positionierelemente (18) radial zu der Zentralachse (12) des Tragkörpers (13) verlaufen,
- wobei entlang einer Kreisumfangsrichtung (20) der Tragebene (14) abwechselnd eine Mehrzahl von ersten und zweiten Positionierelementen (16, 18) angeordnet ist, und
- wobei Paare aus ersten und zweiten Positioniervorsprüngen (17, 19) größenveränderbare Positionierfenster (21) ausbilden, welche jeweils zur Hindurchführung von wenigstens einem Leiterende (2), insbesondere von zwei Leiterenden (2), vorgesehen sind,
**dadurch gekennzeichnet, dass**
- die ersten Positionierelemente (16) an ihren beiden in Richtung zur Zentralachse (12) verlaufenden Längsseiten (22, 23) jeweils mehrere der ersten Positioniervorsprünge (17) aufweisen, dass
- die zweiten Positionierelemente (18) an ihren beiden in Richtung zur Zentralachse (12) verlaufenden Längsseiten (24, 25) jeweils mehrere der zweiten Positioniervorsprünge (19) aufweisen, und dass
- jeweils nur ein erstes Positionierelement (16) oder nur ein zweites Positionierelement (18) zur Positionierung zwischen zwei in Kreisumfangsrichtung (20) unmittelbar benachbarten, radial verlaufenden Sektionen (9) von Leiterenden (2) vorgesehen ist.

2. Positioniervorrichtung nach Anspruch 1 **dadurch gekennzeichnet, dass** die ersten und/oder die zweiten Positionierelemente (16, 18) in Bezug auf ihre Längsmittelachsen (26, 27) symmetrisch positionierte und symmetrisch geformte erste Positioniervorsprünge (17) respektive zweite Positioniervorsprünge (19) aufweisen.

3. Positioniervorrichtung nach Anspruch 1 oder 2 **dadurch gekennzeichnet, dass** eine parallel zur Tragebene (14) gemessene Mindestbreite (30) eines zentralen Tragabschnittes (28, 29) des ersten und/oder zweiten Positionierelementes (16, 18) mehr als 60%, insbesondere zwischen 70% bis 99%, einer lichten Weite (31) zwischen zwei in Kreisumfangsrichtung (20) unmittelbar benachbarten, auf einer gemeinsamen Kreisbahn (5) anzuordnenden Leiterenden (2) beträgt, wobei die Mindestbreite (30) des zentralen Tragabschnittes (28, 29) auf die besagte, gemeinsame Kreisbahn (5) bezogen ist.

4. Positioniervorrichtung nach einem der vorhergehenden Ansprüche **dadurch gekennzeichnet, dass** jedem der ersten Positionierelemente (16) und jedem der zweiten Positionierelemente (18) jeweils ein Linear-Verstellantrieb (32, 33) zugeordnet ist, sodass jedes der ersten und zweiten Positionierelemente (16, 18) radial zur Zentralachse (12) verstellbar ist.

5. Positioniervorrichtung nach Anspruch 4 **dadurch gekennzeichnet, dass** jedes der ersten und zweiten Positionierelemente (16, 18) unter Zwischenschaltung von jeweils einem Schwenkhebel (34, 35), welche Schwenkhebel (34, 35) jeweils eine parallel zur Tragebene (14) verlaufende Schwenkachse (36, 37) aufweisen, mit einem der genannten Linear-Verstellantriebe (32, 33) bewegungsgekoppelt ist.

6. Positioniervorrichtung nach Anspruch 4 oder 5 **dadurch gekennzeichnet, dass** eine zentrale Steuervorrichtung (38) ausgebildet ist, welche dazu eingerichtet ist, jeden der Linear-Verstellantriebe (32, 33) unabhängig voneinander zu aktivieren und abzuschalten.

7. Positioniervorrichtung nach einem der vorhergehenden Ansprüche **dadurch gekennzeichnet, dass** eine Vorpositionierungs-Vorrichtung (44) ausgebildet ist, welche in Bezug auf eine Einführrichtung (45) von Leiterenden (2) in die Positionierfenster (21) vor den Positionierfenstern (21) angeordnet ist.

8. Positioniervorrichtung nach Anspruch 7 **dadurch gekennzeichnet, dass** die Vorpositionierungs-Vorrichtung (44) mehrere radial zur Zentralachse (12) verlaufende Positionierschlitze (46) aufweist, welche Positionierschlitze (46) jeweils zum Einführen von gesamten Sektionen (9) von Leiterenden (2) vorgesehen sind.

9. Positioniervorrichtung nach Anspruch 8 **dadurch gekennzeichnet, dass** die Positionierschlitze (46) wenigstens an einzelnen ihrer Begrenzungswände Einführfasen (47) für Leiterenden (2) aufweisen, welche Einführfasen (47) in Einführrichtung (45) der Leiterenden sich verjüngende Positionierschlitze (46) ausbilden.

10. Positioniervorrichtung nach Anspruch 8 oder 9 **dadurch gekennzeichnet, dass** die Positionierschlitze (46) in mehreren, zusammengefügten Teilplatten ausgebildet sind, oder dass alle Positionierschlitze (46) in einer einzigen Positionierplatte (48) ausgebildet sind.

11. Positioniervorrichtung nach einem der vorhergehenden Ansprüche **dadurch gekennzeichnet, dass** mehrere Radial-Vorpositionierungselemente (49) ausgebildet sind, welche Radial-Vorpositionierungselemente (49) entlang der Kreisumfangsrichtung (20) orientierte Positionierstege (50) aufweisen, wobei zwischen zwei in Radialrichtung (8) unmittelbar benachbarten Positionierstegen (50) ein Einführbereich (51) für ein Paar aus zwei in Radialrichtung (8) unmittelbar benachbarten Leiterenden (2) ausgebildet ist.

12. Positioniervorrichtung nach Anspruch 11 **dadurch gekennzeichnet, dass** die Positionierstege (50) jeweils wenigstens eine Einführfase (52) aufweisen, sodass die Einführbereiche (51) für Paare von Leiterenden (2) entlang der Einführrichtung (45) verjüngend ausgebildet sind.

13. Positioniervorrichtung nach Anspruch 11 oder 12 **dadurch gekennzeichnet, dass** die Radial-Vorpositionierungselemente (49) bezüglich der ersten und zweiten Positionierelemente (16, 18) baulich eigenständig ausgeführt sind.

14. Positioniervorrichtung nach einem der Ansprüche 11 bis 13 **dadurch gekennzeichnet, dass** die Radial-Vorpositionierungselemente (49) innerhalb einer zentralen Bauteilebene (53) angeordnet sind, welche zentrale Bauteilebene (53) zwischen der Tragebene (14) mit den ersten und zweiten Positionierelementen (16, 18) und einer unteren Bauteilebene (54) mit den Positionierschlitzen (46) angeordnet ist.

15. Positioniervorrichtung nach einem der Ansprüche 11 bis 14 **dadurch gekennzeichnet, dass** die Radial-Vorpositionierungselemente (49) jeweils einen radial zur Zentralachse (12) verlaufenden Tragabschnitt (55) aufweisen, und dass an beiden radialen Längsrändern (56, 57) eines Tragabschnittes (55) jeweils eine Mehrzahl von Positionierstegen (50) ausgebildet ist.

16. Positioniervorrichtung nach einem der Ansprüche 7 bis 15 **dadurch gekennzeichnet, dass** die Radial-Vorpositionierungselemente (49) und die Vorpositionierungs-Vorrichtung (44) in Bezug auf die Zentralachse (12) starr festgelegt sind.

17. Positioniervorrichtung nach einem der vorhergehenden Ansprüche **dadurch gekennzeichnet, dass** zwischen Paaren von in Kreisumfangsrichtung (20) unmittelbar benachbarten ersten und zweiten Positionierelementen (16, 18) jeweils eine Kopplungswippe (40) ausgebildet ist, welche zur Erzwingung von gegenläufigen radialen Bewegungen des ersten und zweiten Positionierelementes (16, 18) innerhalb eines Paares aus ersten und zweiten Positionierelementen (16, 18) vorgesehen ist.

18. Positioniervorrichtung nach Anspruch 17 **dadurch gekennzeichnet, dass** die Kopplungswippen (40) jeweils eine parallel zur Zentralachse (12) verlaufende Wippachse (41) aufweisen, und dass ein erster Endabschnitt (42) der Kopplungswippen (40) mit dem ersten Positionierelement (16) gelenkig verbunden ist und ein zweiter Endabschnitt (43) der Kopplungswippen (40) mit dem zweiten Positionierelement (18) gelenkig verbunden ist.

19. Verfahren zum Herstellen einer elektrischen Wicklung (3) einer elektrischen Maschine, umfassend folgende Verfahrensschritte:
- Bereitstellen von elektrischen Leiterelementen, deren Leiterenden (2) oder Gruppen von Leiterenden (2) entlang von mehreren Kreisbahnen (5) mit einem gemeinsamen Zentrumspunkt (6) angeordnet und dabei in Kreisumfangsrichtung (20) der Kreisbahnen (5) voneinander beabstandet sind, sodass in Radialrichtung (8) zu den Kreisbahnen (5) verlaufende Sektionen (9) von Leiterenden gebildet sind, welche radial verlaufenden Sektionen (9) entlang der Kreisumfangsrichtung (20) der Kreisbahnen (5) verteilt angeordnet sind,
- Bereitstellen einer Positioniervorrichtung (1), welche insbesondere nach wenigstens einem der vorhergehenden Ansprüche 1 bis 18 ausgebildet ist, und zumindest folgende Merkmale umfasst:
- einen Tragkörper (13), welcher eine Tragebene (14) und eine senkrecht zu der Tragebene (14) verlaufende Zentralachse (12) definiert,
- mehrere erste Positionierelemente (16) die jeweils mehrere erste Positioniervorsprünge (17) aufweisen, welche ersten Positionierelemente (16) radial zu der Zentralachse (12) des Tragkörpers (13) verlaufen,
- mehrere zweite Positionierelemente (18) die jeweils mehrere zweite Positioniervorsprünge (19) aufweisen, welche zweiten Positionierelemente (18) radial zu der Zentralachse (12) des Tragkörpers (13) verlaufen,
- wobei entlang einer Kreisumfangsrichtung (20) der Tragebene (14) abwechselnd eine Mehrzahl von ersten und zweiten Positionierelementen (16, 18) angeordnet ist, und
- wobei Paare aus ersten und zweiten Positioniervorsprüngen (17, 19) größenveränderbare Positionierfenster (21) ausbilden, welche jeweils zur Hindurchführung von wenigstens einem Leiterende (2), insbesondere von zwei Leiterenden (2), vorgesehen sind,
**dadurch gekennzeichnet, dass**
- die ersten Positionierelemente (16) an ihren beiden in Richtung zur Zentralachse (12) verlaufenden Längsseiten (22, 23) jeweils mehrere der ersten Positioniervorsprünge (17) aufweisen, dass
- die zweiten Positionierelemente (18) an ihren beiden in Richtung zur Zentralachse (12) verlaufenden Längsseiten (24, 25) jeweils mehrere der zweiten Positioniervorsprünge (19) aufweisen, und dass
- jeweils nur ein erstes Positionierelement (16) oder nur ein zweites Positionierelement (18) zwischen zwei in Kreisumfangsrichtung (20) unmittelbar benachbarten, radial verlaufenden Sektionen (9) von Leiterenden (2) eingeführt und positioniert wird, und dass
- durch radiales Verschieben und gesteuertes Positionieren der ersten und zweiten Positionierelemente (16, 18) die zwischen den ersten und zweiten Positioniervorsprüngen (17, 19) angeordneten Leiterenden (2) in deren Sollpositionen in Bezug auf die Radialrichtung (8) der jeweiligen Kreisbahnen (5) verbracht werden.

20. Verfahren nach Anspruch 19, **dadurch gekennzeichnet, dass** die jeweils links und rechts zu der Längsmittelachse (26) der ersten Positionierelemente (16) angeordneten Leiterenden (2) mittels den ersten Positioniervorsprüngen (17) in Radialrichtung zur Zentralachse (12) nach außen positioniert werden, und dass die jeweils links und rechts zu der Längsmittelachse (27) der zweiten Positionierelemente (18) angeordneten Leiterenden (2) mittels den zweiten Positioniervorsprüngen (19) in Radialrichtung zur Zentralachse (12) nach innen positioniert werden.

21. Verfahren nach Anspruch 19 oder 20, **dadurch gekennzeichnet dass** die elektrischen Leiterelemente in Aufnahmenuten (10) eines hohlzylindrischen Statorkerns (4) aufgenommen sind und die Leiterenden (2) der elektrischen Leiterelemente mittels den Aufnahmenuten (10) in radialer Richtung (8) und in Kreisumfangsrichtung (20) vorpositioniert werden.

22. Verfahren nach einem der Ansprüche 19 bis 21, **dadurch gekennzeichnet dass** nach dem Positionieren der Leiterenden (2) ein Schweißprozess ohne Zugabe von Zusatzmitteln ausgeführt wird, insbesondere paar- oder gruppenweise aneinander anliegende Leiterenden (2) in einem Laserschweißprozess elektrisch leitend miteinander verbunden werden.
